# EUROPEAN PATENT APPLICATION

(11) **EP 2 113 168 A2**
(43) Date of publication of application: **04.11.2009**
(21) Application number: 09006012.0
(22) Date of filing: 30.04.2009
(51) Int. Cl.: A01K 1/01, A01K 1/02

(54) **Cat litter box**

(30) Priority: 01.05.2008 US 113291
(71) Applicant: Rolf C. Hagen, Inc., Baie D'urfe, QC H9X 0A2 (CA)
(72) Inventor: Plante, Robin, Saite-Barbe Quebec JOS 1PO (CA)
(74) Representative: HOFFMANN EITLE

(57) **Abstract**

A cat litter box having a base (10) and detachable cover (12) secured to the base (10). The front portion (20) of the top of the cover and an inwardly and outwardly swinging door (14) attached to the front portion (20) together form a bifolding door for opening the front and a portion of the top of the box for servicing the litter box. The cover (12) when detached from the base (10) nests with the base (10) for storage and shipping the box.

## Description

### SUMMARY OF INVENTION

This invention generally relates to enclosures, and specifically to cat litter boxes.

The cat litter box embodies one or more of the following improvements that make cleaning and maintenance of the box more convenient, make it easier for the cat to enter and leave the box, employ improved latches to lock the base and cover together; reduce the knock down size of the box while enabling the various parts to be factory assembled, and reduce or prevent the transfer of unpleasant odors from the box to the surrounding area.

### BRIEF DESCRIPTION OF DRAWINGS

The accompanying drawings are not intended to be drawn to scale. In the drawings, each identical or nearly identical component that is illustrated in various figures is represented by a like numeral. For purposes of clarity, not every component may be labeled in every drawing. In the drawings:
FIG. 1 is a front perspective view of one embodiment of cat litter box in accordance with this invention;
FIG. 2 is a top plan view thereof.
FIG. 3 is a cross-sectional elevation view thereof taken along section line 3-3 of FIG. 2, with the door and roof in the closed position;
FIG. 4 is a cross-sectional view similar to FIG. 3 but showing the door in an open position;
FIG. 5 is a cross-sectional view similar to FIGS. 3 and 4 but showing both the door and the retractable roof in their fully opened position, providing maximum access to the box interior;
FIG. 6 is a fragmentary cross-sectional view taken along section line 6-6 in FIG. 2 and showing one of the latches in the unlocked position, that connects the base and top together;
FIG. 7 is a cross-sectional view similar to FIG. 6 but showing the latch in its locked position;
FIG. 8 is a fragmentary top view of the latch shown in FIGs. 6 and 7;
FIG. 9 is a fragmentary cross-sectional perspective view showing the manner in which the rim structures of the base and cover engage one another;
FIG. 10 is a fragmentary top perspective view of the front position of the litter box.

### DETAILED DESCRIPTION

This invention is not limited in its application to the details of construction and the arrangement of components set forth in the following description or illustrated in the drawings. The invention is capable of other embodiments and of being practiced or of being carried out in various ways. Also, the phraseology and terminology used herein is for the purpose of description and should not be regarded as limiting. The use of "including," "comprising," or "having," "containing," "involving," and variations thereof herein, is meant to encompass the items listed thereafter and equivalents thereof as well as additional items.

The cat litter box of the present invention includes in its general organization, a base 10, cover 12 and front swinging door 14. A cat can push the door open from either the outside or inside of the box so as to easily enter or leave the box interior. The cover includes a top wall 16 having a fixed rear section 18 and a movable front section 20. The base 10 and cover 12 are releasably connected together by latches 22 disposed on opposite sides 24 and 26 of the litter box. The base 10 includes a bottom wall 30, front and rear walls 32 and 34 and side walls 36 and 38. The cover 12, base 10 and top front section 20 of the box may be made of polypropylene, polyethylene, styrene ABS, or other similar materials. The front door 14 preferably is made of clear ABS, but other similar materials may be used.

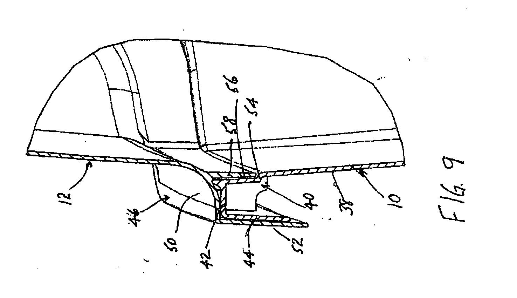

The base 10 has a rim 40 that extends about the top edges of the front, rear and side walls 32, 34, 36 and 38 and includes a top outwardly extending flange 42 and a downwardly extending skirt 44 spaced outwardly from the front, side and rear walls of the base. The general rim configuration is shown in FIG. 9. The rim 40 of the base cooperates with rim 46 on the cover 12 to seat the cover firmly on the base. As described in detail below, the rim 46 of the cover carries a latching mechanism 48 for detachably locking the base and cover together. The rim 46 includes an outwardly extending flange 50 and a skirt 52 that engage the upper surface of the flange 42 and outer surface of skirt 44 of the base rim 40.

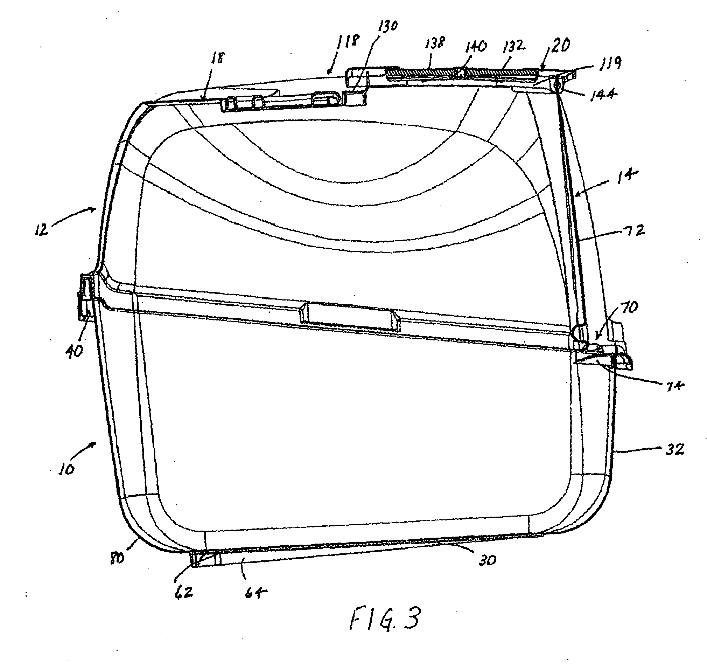

As shown in FIGS. 3-5 and 9, in one embodiment, the side wall 38 has a step 54 spaced a short distance from the top of the wall to create a recess 56 on the inside of the upper end of the side wall, which recess receives the lower ends 58 of the side and back walls of the cover 12. This structure preferably extends continuously along the side and rear walls of the base and cover and further extends onto the side portions 60 of the front wall.

As shown in FIGS. 3-5, the bottom wall 62 of the base 10 carries a small platform 64 that tilts the base slightly downwardly toward the front wall 32, that causes litter (not shown) deposited in the base to spill toward the front of the base to increase the litter depth in the area beneath and behind the door 14.

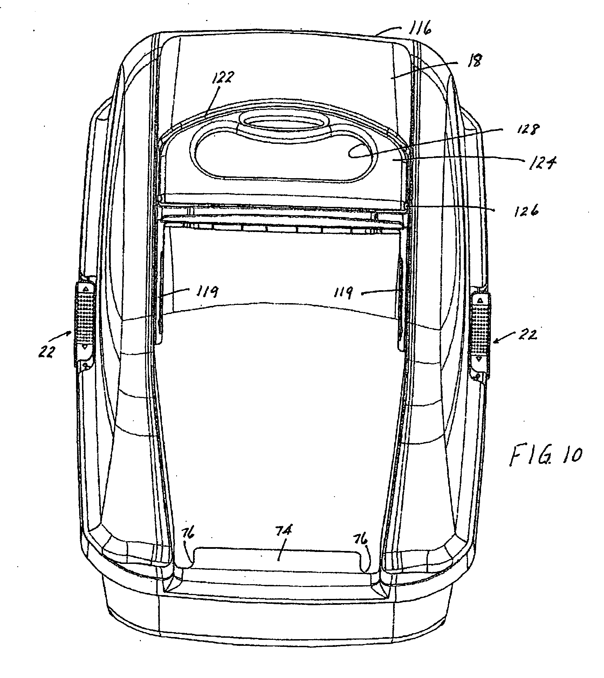

The bottom 70 of the door opening 72 is defined in part by a lip 74 that extends inwardly of the base. The lip 74 includes recesses 76 at its ends (see FIG. 10) that enable a waste bag (not shown) to be hooked over the lip so that the bag may be held securely in place with only one hand and a person cleaning the box may scoop up and/or sift the litter and deposit the waste material in the bag. The base 10 has a large radius at the lower rear corner 80 of the rear wall 34, particularly as shown in FIGS. 3, 4, and 5. This shape makes it easier to sift the litter as it helps to tumble the waste when the litter is scooped.

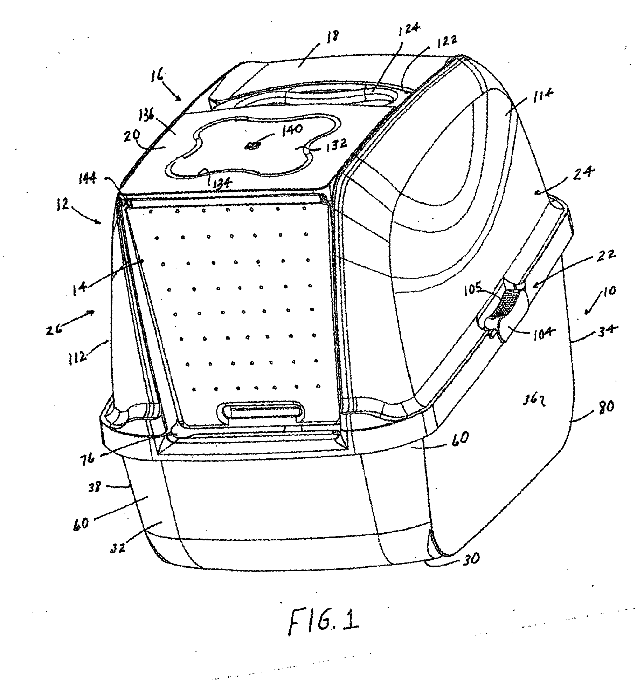

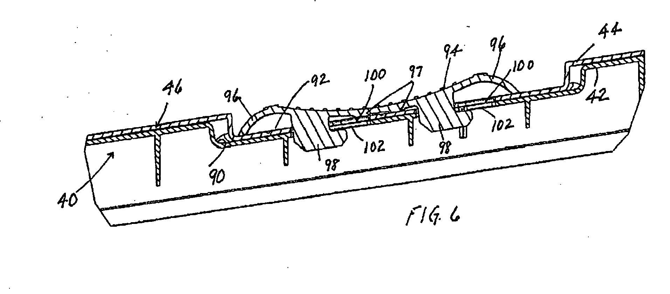

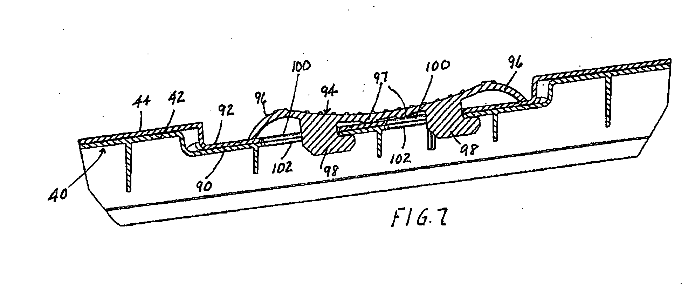

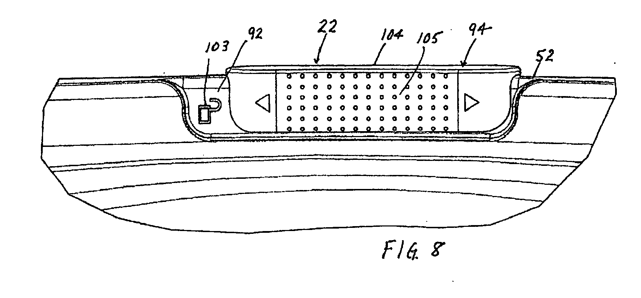

In FIGS. 1 and 6-8 the latch 22 that locks the base 10 and cover 12 together is shown in detail. The rims 40 and 46 of the base and cover have recesses 90 and 92 in their respective flanges 42 and 44 that closely nest with one another when the cover is placed on the base and together accommodate the latch. The recess 92 is longer than the latch 94 enabling the latch to move longitudinally in the recess on its supports 96 and 97. The latch carries a pair of L-shaped catches 98 that extend through slots 100 in the recess 92 provided in the flange 50 of the cover rim 46. Similar slots 102 are provided in the flange 42 of the base recess 90, and the catches 98 extend through the slots 102 as well when the cover is placed on the base with their respective rims engaged. In FIG. 6 the L-shaped catches 98 are shown extending through the slots 100 and 102 in the flange 42 of the base, but the catches do not engage the margins of the slots 102 and, therefore, the catches are not engaged and do not prevent separation of the base 10 and cover 12. When the latch 94 is moved to the right as viewed in FIG. 6 so as to assume the position shown in FIG. 7, the L-shaped catches 98 engage and underlie the margins of the slots 102 so as to prevent separation of the cover 10 and base 12. As shown in FIG. 8, a symbol or symbols such as a lock 103 may be carried on the surface of the recess 92 to indicate the locked and unlocked positions of the catch.

As shown in FIGS. 1 and 8 the latch 94 includes a vertical side wall 104 that extends over the skirt 52 of the rim 46 of the cover to maintain the position of the latch in the recess 92. The latch also includes a stippled upper surface 105 (see FIG. 1) to facilitate engagement of the latch to move it between locked and unlocked positions of FIGS. 7 and 6.

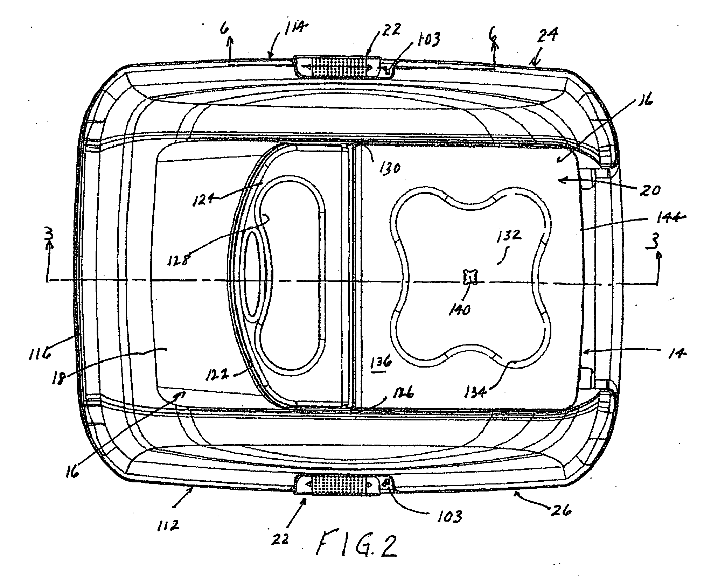

The cover 12 includes top wall 16, side walls 112 and 114, rear wall 116 and the front door 14. The side walls 112 and 114 and rear wall 116 in the illustrated embodiment are integrally molded as a single unit along with the rear fixed portion 18 of the top wall. The front portion 20 of the top wall 16 is supported in the closed substantially horizontal position by the inwardly extending flanges 119 at the tops of the side walls 112 and 114 (see FIGS. 3-5 and 10). The front portion 20 of the top wall of the cover and the door 14 are separately molded independently of one another and of the major unitized portion of the cover. The rear portion 18 of the cover top wall includes a recess 122 that houses a handle 124 pivotally supported by a hinge 126 along the front edge thereof (see FIG. 2). The handle, when used, is pivoted upwardly on the hinge into a generally vertical position and extends upwardly from the plane of the top wall 18. The handle in the embodiment shown includes an opening 128 large enough to comfortably receive the four fingers of the hand so that it may be gripped firmly, and the box may be carried conveniently and comfortably with or without a cat inside the box.

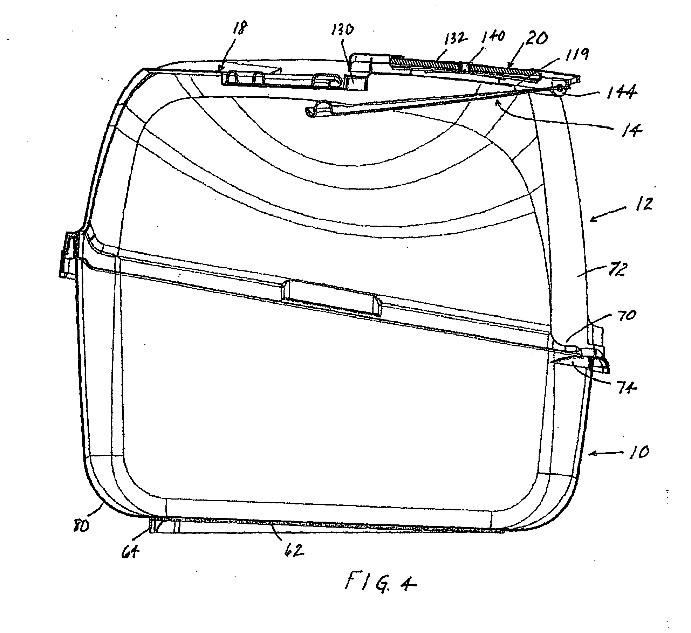

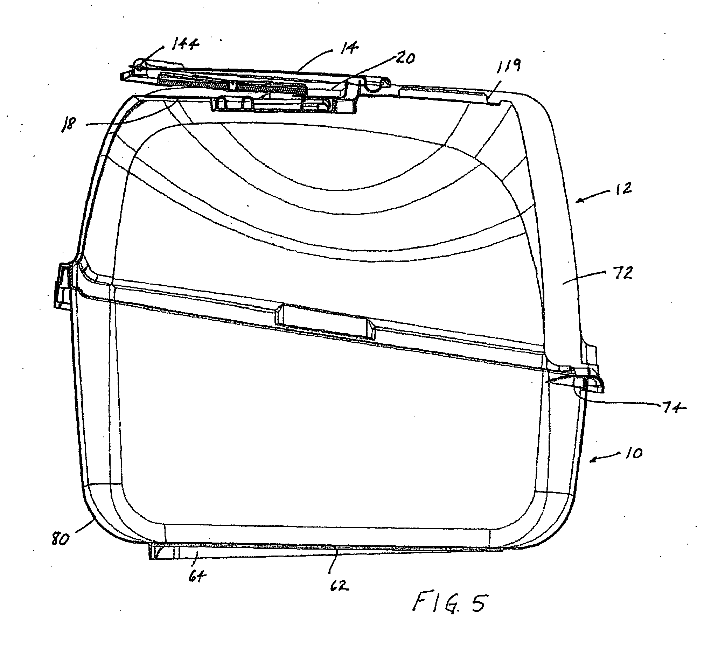

The front movable section 20 of the top wall 16 of the cover is also pivotally mounted by means of a transverse hinge 130 along the rear edge of the movable section 20 and is disposed in a plane above that of the rear section 18 (see FIG. 3) The hinge 130 enables the front section 20 to pivot about an arc of approximately 180° from the normally closed position shown in FIGS. 3 and 4 to the open position shown in FIG. 5.

The front cover section 20 includes a chamber that removably houses a carbon filter 132. The carbon filter is exposed through a decorative opening 134 in the top surface 136 of the front section 20 and is held in place by a retainer 138 that may be an integral part of the front section. The retainer 138 include a number of openings to allow air to pass through the carbon filter 132 to and from the interior of the litter box. The filter may be held in position by a fastener 140 that passes through the filter and is connected to the retainer. The retainer is perforated so as to allow the flow of air to and from the interior of the litter box. The filter removes odor carrying material from air flowing from the interior of the box to the surrounding atmosphere.

Another transverse hinge 144 is incorporated into the cover top wall 16. The hinge supports the door 14 and allows it to swing freely both inwardly and outwardly from its normal, substantially vertical, closed position and also allows the door to swing to a position above front section 20 of the cover top wall when the front section 20 is pivoted about hinge 130 to the open position lying atop the rear section 18 (see FIG. 5). It is evident from an inspection of FIG. 3 that access to and egress from the litter box by a cat may easily be achieved with minimum pressure exerted by a cat moving through the door opening in light of the freely swinging door. It is also evident as shown in FIG. 5 that access to the interior of the box for servicing or cleaning may easily be achieved without removing the top from the base simply by inverting the front section 20 of the cover so that it lies upon the rear section 18 and collapsing the front door 14 on the top of the undersurface of the open front section 20 as illustrated in FIG. 5.

The cat litter box described above has many advantages. The folding door in combination with the folding front section of the top wall of the cover provide a unique way to access the litter for maintenance, without removing the entire cover 12 from the base 10. The door 14 hinged to the front section 20 of the top wall 16 of the cover that in turn is hinged to the rear portion 18 of the cover enables both the door and the front section 20 of the top wall to fold together and stack on top of the rear section 18 of the cover (see FIG. 5). The large resulting opening through both the front and top of the box provides very substantial convenience for the person cleaning the litter box. The lip 74 on the front of the base 10 that protrudes inwardly toward the box interior provides a wide hook-like connector to engage an edge of the open end of a trash bag so that the person cleaning the litter box can hold the bag securely in place with one hand and have the other hand free to hold a scooper to sift the litter and brush the cat's waste inside the bag.

The design of the litter box enables the cover, when inverted, to telescope into the base so as to reduce shipping costs and the space necessary for storage. Furthermore, the product design allows all of the components of the cover such as the folding top wall 20, front door 14, side latches 22 and handle 124 to be preassembled by the manufacturer, and the cover with all of those preassembled parts nests conveniently inside the base 10.

The large radius 80 at the rear of the base causes the waste with the litter to tumble when the litter is being sifted with the aid of a scooper.

The back of the base being higher than the front retains horizontally projected urine in the base and avoid contact with the cover. Moreover, the mating profile of the cover and base rims preclude urine from leaking out of the box.

The sliding latches on the opposite sides of the box securely hold the base and cover together even when the box is being carried by the handle.

Having thus described several aspects of this invention, it is to be appreciated that various alterations, modifications, and improvements will readily occur to those skilled in the art. Such alterations, modifications, and improvements are intended to be part of this disclosure, and are intended to be within the scope of the invention. Accordingly, the foregoing description and drawings are by way of example only.

## Claims

1. A base (10) and a cover (12) together forming an enclosure,
said cover (12) having a top wall (16) with a rear section (18) and a front section (20) hinged to the rear section and movable between a closed position wherein it forms substantially a continuation of the rear section and an open position wherein it lies against the fixed section to partially open the top of the enclosure,
and a door (14) movably attached to the front section (20) of the top wall (16) and lying against the front section of the top wall when the front section (20) lies against the rear section (18) so as to open a side and a portion of the top of the box.

2. A cat litter box comprising
a base (10) having a bottom wall (30) and peripheral side walls (32, 34, 36, 38) and an open top,
a cover (12) having opposed side walls and a rear wall mounted on top of the base peripheral side wall,
said cover (12) also having a top wall (16) including a fixed rear section (18) and a movable front section (20) hinged (130) to the rear section enabling the front section to be folded back to lie on top of the rear section,
an inwardly and outwardly swinging door (14) attached to the front section (20) of the cover top wall (16) and hanging down toward the top edge (42) of the base peripheral side wall (32, 34, 36, 38) at the front of the base, said door being foldable by means of the hinge (144) onto the front section of the cover when the front section is folded onto the fixed rear section of the top wall so that the front door and the front section of the top wall are open to provide easy access for maintenance of the litter box.

3. The device as defined in claim 1 wherein the front section (20) of the cover contains a filter (132) for reducing odor from the box.

4. The device as defined in claim 1 or 2 wherein the door and front and rear sections of the wall stack in substantially horizontal planes one on top of the other when the door and front section of the top wall are fully open.

5. The device of any of claims 1 to 3 wherein the cover (12) when detached from the base (10) nests in the base to facilitate storage and shipment.

6. The device of claim 5 wherein the peripheral wall of the base is lower at the front than at the back of the base.

7. The device of any of claims 1 to 6 wherein the base and the cover can be releasably locked together, preferably by means of latches which are provided on opposite sides of the box.

8. The device of claim 6 wherein a handle (124) is mounted on the rear section of the top wall of the cover for carrying the box when the cove and base are locked together.

9. The device of claim 6 or 8 wherein the base (10) has a rim (40) about its periphery attached to the top of the side walls including a generally horizontal flange (42) extending outwardly from the top of the side walls,
a downwardly extending skirt (44) attached to the flange (42) and spaced from side walls,
slots (102) in the flanges on opposite sides of the base,
and said latches (22) have retainers (98) that extend downwardly from the cover and engage the slots for releasably locking the base and cover together.

10. The device of claim 9 wherein the cover (12) has peripheral rims (46) on the bottom of the side walls that carry the latches (22).

11. The device of claim 10 wherein the latches (22) are slidably mounted on the peripheral rims for engaging and disengaging the margins of the slots.

12. The device of any of the preceding claims wherein the peripheral side walls of the base include front (32) and rear (34) walls and opposed side walls (36, 38);
the front section can be folded to move between a closed position registering with the tops of the opposed side walls to close the top of the litter box and a retracted position wherein it overlies the rear section of the top wall to open the front portion of the top of the cover;
and the door is foldable onto the front section of the top wall when the front section is in the retracted position.
